# EUROPEAN PATENT APPLICATION

(11) **EP 2 039 404 A2**
(43) Date of publication of application: **25.03.2009**
(21) Application number: 08016562.4
(22) Date of filing: 19.09.2008
(51) Int. Cl.: A63F 13/02, A63F 13/10

(54) **Method and apparatus for enhancing entertainment software through haptic insertion**

(30) Priority: 21.09.2007 US 974399 P
(71) Applicant: Sony Computer Entertainment America, Inc., Foster City, CA 94404 (US)
(72) Inventor: Watson, Brian, Foster City, CA 94404 (US); Zalewski, Gary, Foster City, CA 94404 (US)
(74) Representative: Müller - Hoffmann & Partner

(57) **Abstract**

A method for enhancing entertainment through haptic insertion includes monitoring signal(s) during the execution of entertainment software, recognizing that the monitored signal(s) satisfy predetermined criteria, and generating a haptic control signal in response to enhance an entertainment experience. Monitored signals may include, for example, audio signals, video signals, data signals, control signals, and the like. Entertainment software may include, for example, a video game, an audio-visual work, an audio work, and the like. A device for enhancing entertainment software through haptic insertion includes at least one processors and an output unit coupled to the processor(s) and including a haptic control output. The processor(s) are configured to monitor at least one signal during the execution of entertainment software, to recognize that the monitored signal(s) satisfy a predetermined criterion, to generate a haptic control signal in response to such recognition, and to output the generated haptic control signal through the haptic control output of the output unit.

## Description

### TECHNICAL FIELD

This disclosure relates to the enhancement of entertainment software by inserting haptics.

### CROSS-REFERENCE TO RELATED APPLICATIONS

This application claims priority to co-pending U.S. Provisional Application No. 60/974,399, filed September 21, 2007 entitled "Method And Apparatus For Enhancing Entertainment Software Through Haptic Insertion" which is hereby incorporated by reference in its entirety

### BACKGROUND

Entertainment software, such as, for example, video games, movies, music, audio, and the like, typically provides video and/or audio feedback. Some entertainment software provides additional sensory feedback through haptic controllers. For example, the Playstation®2 controller is haptic-enabled, such that a video game can signal a rumble effect that can be varied to cause various tactile sensations to enhance the gameplay experience. Haptics include any technology that stimulates tactile and/or kinesthetic sensations, such as, for example, technology that generates thermal feedback, force feedback, vibration, and the like. While haptic controls are generated by some entertainment software, not all entertainment software is haptic-enabled, and not all platforms for executing entertainment software support haptic feedback.

This disclosure sets forth various techniques and devices to enhance entertainment software using haptic technology. By way of example, and not by way of limitation, a platform for playing entertainment software, and/or a controller for use therewith may be enhanced so as to insert haptic control signals.

### SUMMARY

This disclosure is directed to methods and devices for emulating and enhancing, in a first video game platform, the execution of video games written for a second video game platform.

Generally, a method for enhancing entertainment through haptic insertion includes monitoring signal(s) during the execution of entertainment software, recognizing that the monitored signal(s) satisfy predetermined criteria, and generating a haptic control signal in response to enhance an entertainment experience. Monitored signals may include, for example, audio signals, video signals, data signals, control signals, and the like.
Entertainment software may include, for example, a video game, an audio-visual work, an audio work, and the like.

In some embodiments, the predetermined criteria for haptic insertion varies based on the entertainment software being executed. For example, haptic insertion criteria can be defined for a particular video game, and used to augment and/or replace the haptic insertion criteria that would otherwise be used. When the video game is being played, the corresponding haptic insertion criteria is used to determine when to insert haptic events. Haptic insertion criteria may include, for example, surpassing a threshold, falling below a threshold, matching a pattern, and the like. Furthermore, some embodiments include user-configurable haptic insertion options to vary or control haptic insertion.

Haptic control signals may be used to stimulate tactile and/or kinesthetic sensations, such as, for example, by controlling pressure, vibration, force feedback, temperature, and the like.

Generally, a device for enhancing entertainment software through haptic insertion includes at least one processors and an output unit coupled to the processor(s) and including a haptic control output. The processor(s) is/are configured to monitor at least one signal during the execution of entertainment software, to recognize that the monitored signal(s) satisfy a predetermined criterion, to generate a haptic control signal in response to such recognition, and to output the generated haptic control signal through the haptic control output of the output unit. Haptic actuators may include, for example, a vibrotactile actuator, a pressure actuator, a temperature actuator, and the like. The device may include a haptic actuator and/or an external haptic actuator that receives the haptic control output.

Some embodiments also include a memory coupled to the processor(s) for storing the predetermined criterion. Each criterion may correspond to one or more entertainment software titles. This predetermined criterion may be updated using a network interface coupled to the processor(s).

Generally, a haptic insertion device includes an input, a memory storing a haptic insertion criterion, and a processor coupled to the input and the memory. The processor is configured to monitor the input during the execution of entertainment software, to recognize when the monitored input satisfies the haptic insertion criterion, and to control a haptic actuator in response to the recognized satisfaction of haptic insertion criterion. The input may be implemented using any sensor device, such as, for example, a microphone, an image sensor, a thermometer, a switch, a data signal, a control signal, and the like.

Furthermore, the haptic insertion device may be enclosed in a casing that is attachable to a controller, such as, a video game controller, a remote control, a touch screen interface, a mouse, a keyboard, and the like, or implemented in a controller. Alternatively, the haptic insertion device may be implemented elsewhere with the processor of the haptic insertion device configured to control the haptic actuator by transmitting a wireless signal to a haptic-enabled controller or to a haptic-enabled device attachable to a controller. When external to the controller, the haptic insertion device may be implemented as a stand-alone device or integrated with another electronic device, such as, for example, a television, a video game console, a computer, a digital video recorder, a video disc player, and the like.

In some embodiments, the haptic insertion criterion corresponds to one or more entertainment software titles. The haptic insertion criterion may be updated using a data interface coupled to the processor. The data interface may be implemented, for example, using a serial port (e.g., a USB port), a network interface, a wireless interface, and the like.

The details of one or more implementations are set forth in the accompanying drawings and the description below. Other features and advantages will be apparent from the description and drawings, and from the claims.

### BRIEF DESCRIPTION OF THE DRAWINGS

FIG. 1A is a block diagram of a haptic insertion device.

FIG. 1B is a flow chart illustrating haptic insertion.

FIG. 2A is a block diagram of a target device that is to be emulated;

FIG. 2B is a block diagram of an emotion engine of the target device of FIG. 1A;

FIG. 2C is a schematic diagram of a host device that emulates the target device of FIGs. 1A-1B;

FIG. 3 is a block diagram of an emulation enhancement device;

FIG. 4 is a flow chart illustrating emulation enhancement.

FIG. 5 is a diagram of a haptic insertion device attached to a video game controller.

FIGs. 6 and 7 depict the haptic insertion device of FIG. 5 in use.

### DETAILED DESCRIPTION

Haptic actuators may be used to stimulate tactile and/or kinesthetic sensations, such as, for example, by controlling pressure, vibration, force feedback, temperature, and the like. Entertainment software, such as, for example, video games, audio-visual works, audio works, and the like, may be enhanced by inserting, adding, and/or augmenting haptics to provide a sensory experience beyond that provided by conventional audio-video technology. For example, many Playstation®2 video games are enhanced to activate a vibrotactile actuator in a controller during game play. Game developers have used this vibrotactile actuator control for a wide variety of purposes. It is desirable to enable haptics in games and other entertainment software that do not otherwise enable haptics, and to augment and/or improve haptics in entertainment software that do enable haptics.

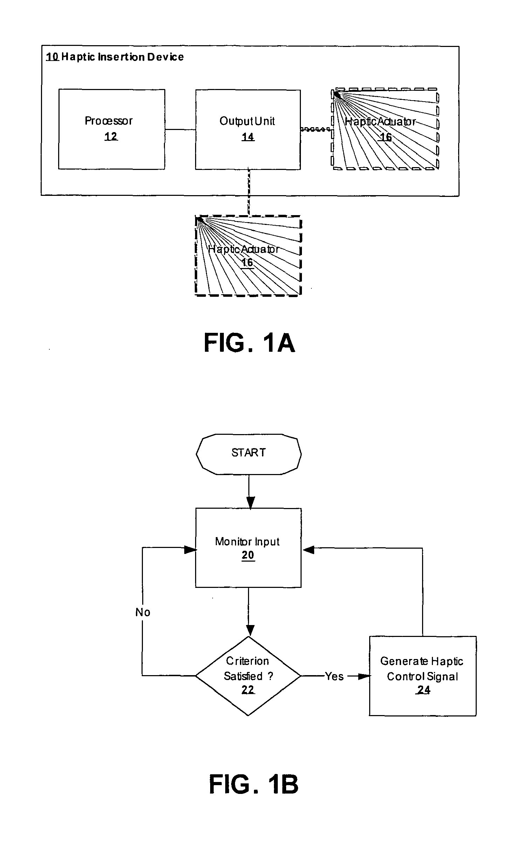

Referring to FIGs. 1A and 1B, a haptic insertion device **10** includes one or more processors **12** and an output unit **14**, which may be coupled to one or more internal and/or external haptic actuators **16**. Haptic actuators **16** may include any device that can stimulate tactile and/or kinesthetic sensations, such as, for example, vibrotactile actuators, pressure actuators, temperature actuators, and the like. The haptic insertion device **10** monitors entertainment software execution (step **20**) to determine if one or more predetermined criteria are satisfied (step **22**). If the predetermined criteria are satisfied, the haptic insertion device **10** generates a haptic control signal (step **24**) to enable one or more haptic actuators **16**. The haptic insertion device **10** then resumes monitoring entertainment execution (step **20**).

The haptic insertion device **10** can monitor entertainment software execution using a wide variety of techniques, depending on the nature of the entertainment software and particular implementation of the haptic insertion device **10**. For purposes of this disclosure, "execution" of entertainment software includes the playback of audio-visual works, the playback of audio works, the use of a video game, the use of computer software, and the like. If, for example, entertainment software is executed using processor(s) **12** of the haptic insertion device **10**, then the haptic insertion device **10** may monitor such execution using any known or later developed interprocess monitoring and/or communication techniques, including, for example, interrupts, traps, exception-handling, and the like.

Entertainment software also may be executed in an emulation environment. In an emulation environment, the haptic insertion device **10** may be implemented by modifying an emulator to monitor the execution of entertainment software using the emulator (step **20**), as is described in detail below.

Furthermore, entertainment software may be executed by a separate device. In this case, the haptic insertion device **10** may include one or more inputs, such as, for example, a microphone, an image sensor, a pressure sensor, a switch, and the like. These inputs may be used to monitor the execution of the entertainment software (step **20**).

The haptic insertion device **10** determines whether one or more criteria have been satisfied (step **22**). Criteria may be based on any detectable data, including audio characteristics (e.g., tone, volume, duration), video characteristics (e.g., color, brightness, hue, saturation), control signals, data, and the like, including any changes to such detectable data, as well as any combinations thereof. For example, a criterion may specify that a haptic event is enabled whenever volume surpasses a threshold or is rising, or that a haptic event is enabled whenever an audio clip is played or a video image is displayed. In some implementations, the device **10** inserts haptics upon detection of high-intensity, low-frequency audio, which may be indicative of an explosion. Criteria may be time-variant *(i.e.,* varies based on time), iteration-variant (*i.e.,* varies with each iteration or cycles through two or more options with each iteration), or otherwise dynamically modified. Table 1 below sets forth exemplary criteria.

**Table 1**

| Default | None |
|---|---|
| Volume > Minimum Threshold & Volume <= Maximum Threshold | Pulse Controller Vibration |
| Volume > Maximum Threshold | Constantly Vibrate Controller |
| Volume decreasing | Cool controller temperature |
| Volume increasing | Heat controller temperature |

For example, a device **10** may use criteria to recognize a sound generated by a video game that is indicative of the "clop-clop" of a horse's hooves. Whenever a video game plays such audio, the device **10** recognizes the audio, and inserts corresponding haptics, such as, for example, a rumble in concert with each "clop".

In some implementations, haptic insertion criteria is specific to one or more entertainment software titles. For example, a football video game and a racing video game would may use different haptic insertion criteria.

If the haptic insertion device **10** determines that a criterion has been satisfied (step **22**), the haptic insertion device **10** generates a haptic control signal (step **24**) to enable one or more haptic actuators **16**. The satisfied criterion may indicate additional information to vary parameters of the haptic actuators **16**, such as, for example, intensity, duration, temperature, force, pressure, and the like.

The haptic insertion device **10** may be implemented in an emulation environment. The process of emulating the functionality of a first computer platform (the "target system") on a second computer platform (the "host system") so that the host system can execute programs designed for the target system is known as "emulation." Emulation has commonly been achieved by creating software that converts program instructions designed for the target platform (target code instructions) into the native-language of a host platform (host instructions), thus achieving compatibility. More recently, emulation has also been realized through the creation of "virtual machines," in which the target platform's physical architecture-the design of the hardware itself-is replicated via a virtual model in software.

Emulation of a gaming platform on another platform has been available for some time. However, in the event of a subsequent development of a host system with technical capabilities different than those of the legacy target system, there is an opportunity in emulation to enhance and supplement the gaming experience in the host system by taking advantage of the additional capabilities present in the host system.

By way of example, and not by way of limitation, a Playstation®2 emulator facilitates the execution of Playstation®2 games on other more advanced platforms, such as, for example, the Playstation®3 game platform. The Playstation®2 emulator running in the Playstation®3 game platform is operable to enhance and/or modify various aspects of the game play experience by intercepting events, commands, and/or instructions and modifying their effects to further enhance the user gaming experience of Playstation®2 games in the Playstation®3 game platform.

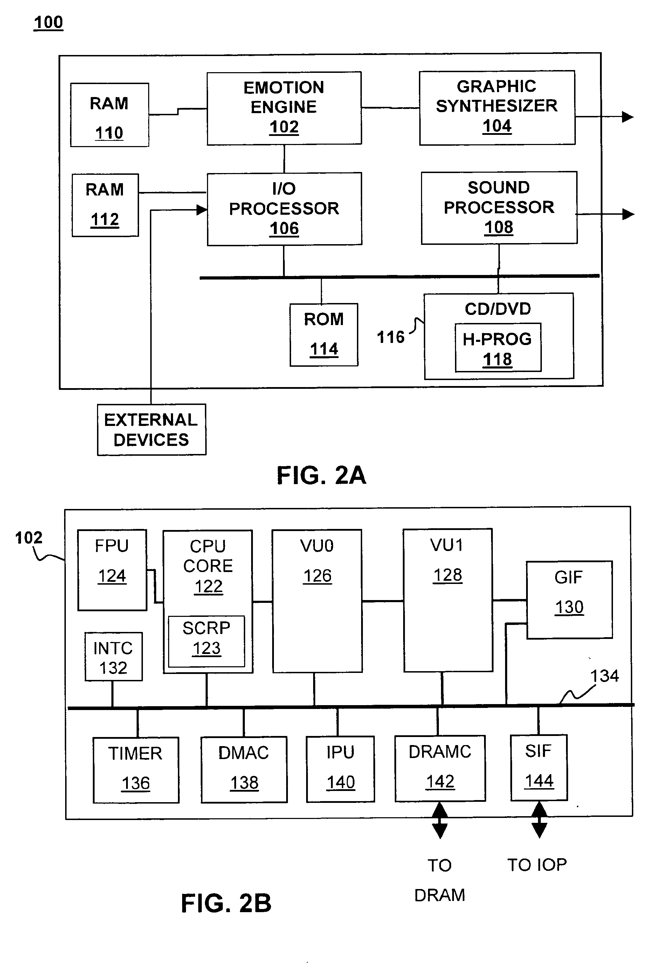

FIG. 2A depicts a block diagram of a target system **100** in the form of a game console device. The target system is built around a main processor module **102** referred to as an emotion engine, a Graphic Synthesizer **104**, an input/output (I/O) processor (IOP) **106** and a sound processor unit **108**. The emotion engine (EE) **102** typically includes a CPU core, co-processors and a system clock and has an associated random access memory (RAM) **110.**
The emotion engine **102** performs animation calculation, traverses a scene and converts it to a two-dimensional image that is sent to the Graphic Synthesizer (GS) **104** for rasterization.

As shown in FIG. 2B, the EE **102** includes a CPU core **122**, with an associated floating point unit (FPU)coprocessor **124**, first and second vector co-processors **126, 128,** a graphics interface controller **130** and an interrupt controller (INTC) **132.** The CPU **122,** vector co-processors **126, 128,** GIF **130** and INTC **132** are coupled to a 128-bit main bus **134.** The FPU **124** is directly coupled to the CPU **122**. The CPU **122** is coupled to a first vector co-processor (VU0) **126,** which is, in turn, coupled to a second vector co-processor (VU1) **128**. The second vector co-processor VU1 **128** is coupled to a graphics interface (GIF) **130**. The EE **102** additional includes a timer **136**, a direct memory access controller (DMAC) **138,** an image data decompression processor (IPU) **140** a DRAM controller **142** and a sub-bus interface (SIF) **144** that facilitates communication between the EE **102** and the IOP **106.**

The CPU core **122** may be a 128-bit processor operating at a **300** megahertz clock frequency using a MIPS instruction set with 64-bit instructions operating as a 2-way superscalar with 128-bit multimedia instructions. The CPU **122** may include a data cache, an instruction cache and an area of on-chip memory **123** sometimes referred to as a scratchpad. The scratchpad **123** serves as a small local memory that is available so that the CPU **122** can perform certain operations while the main bus **134** is busy transferring code and/or data. The first vector unit **126** may be used for animation and physics calculations. The second vector unit **128** may be used for geometry transformations. The GIF **130** serves as the main interface between the EE **102** and the GS **104**.

The IOP **106** may include a processor for backwards compatibility with prior versions of the target system **100** and its own associated RAM **112**. The IOP **106** handles input and output from external devices such as controllers, USB devices, a hard disc, Ethernet card or modem, and other components of the system such as the sound processor unit **108,** a ROM **114** and a CD/DVD unit **116**. A target program **118** may be stored on a CD/ROM disc loaded in the CD/DVD unit **116.** Instructions from the target program **118** may be stored in EE RAM **108** or IOP RAM **112** and executed by the various processors of the target system **100** in a native machine code that can be read by these processors.

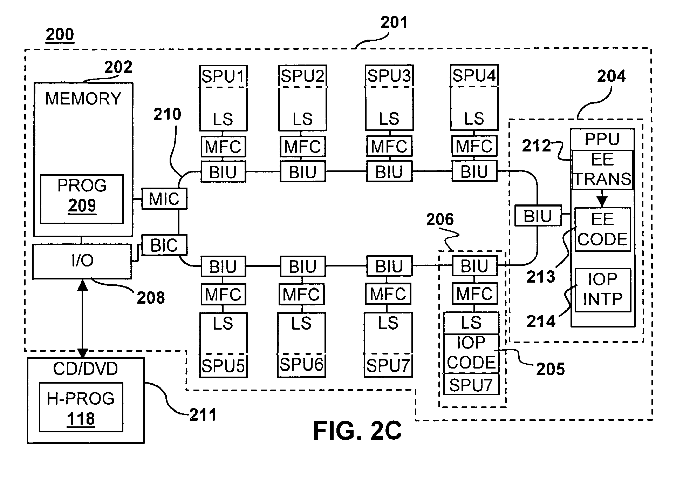

In some implementations, the target system **100** may be emulated using a parallel processing host system **200** so that the host system **200** can run programs written in code native to the target system **100** such as target program **118**. FIG. 2C depicts an example of a host system **200** based on a cell processor **201** that may be configured to emulate the target system **100**. The cell processor **201** includes a main memory **202,** a single power processor element (PPE) **204** and eight synergistic processor elements (SPE) **206.** However, the cell processor **201** may be configured with more than one PPE and any number of SPE's. Each SPE **206** includes a synergistic processor unit (SPU) and a local store (LS). The memory **202**, PPE **204**, and SPEs **206** can communicate with each other and with an I/O device **208** over a ring-type element interconnect bus (EIB) **210.** The PPE **204** and SPEs **206** can access the EIB **210** through bus interface units (BIU). The PPE **204** and SPEs **206** can access the main memory **202** over the EIB **210** through memory flow controllers (MFC). The memory **202** may contain an emulation program **209** that implements interpretation and translation of coded instructions written for the target system **100**. The emulation program **209** may also include hardware emulation code, i.e., software code that emulates certain hardware on the target system **100**.The coded instructions written for the target system **100** may be read from a CD/ROM disc in a CD/DVD reader **211** coupled to the I/O device **208**. A CD/ROM disc containing the target program **118** may be loaded into the CD/DVD reader **211**. At least one of the SPE **206** receives in its local store emulated IOP code **205** having instructions that emulate the IOP **106** described above with respect to FIGs. 2A-2B.

By way of example, a translator **212** running on the PPE **204** may emulate the EE **102** of the target system **100** by translating EE instructions of the target program **118** into machine code **213** that can be run on the PPE **204.** In this embodiment of the invention the PPE **204** also implements an interpreter **214** that emulates the IOP **106** by interpreting IOP instructions of the target program **118.**

The sound processor unit **108** is implemented using one or more synergistic processor units (SPU), such as, for example, SPU4. It should be noted that the sound processor unit **108** is sometimes referred to elsewhere as "SPU2"; however, for purposes of this disclosure, SPU1-8 each refer to synergistic processor units, and the sound processor unit **108** is refer to as "sound processor unit **108**". In some implementations, the sound processor unit **108** enables fourier-based sound effects.

Different aspects of the emulation enhancement will now be described in detail.

Application-Specific Emulator Configuration

When a target program **118** is executed using an emulation of a target system **100,** as opposed to executing the target program directly on an actual target system, its behavior may differ. For example, a host system **200** emulating target system **100** may include capabilities that differ from that of the target system, including but not limited to, different execution speeds, different timings between components, different memory sizes, different processing capabilities, different input/output capabilities, and the like.

Timing differences may result in behavior that differs from that intended. At the simplest level, timing problems may simply cause execution of the target program **118** to be too fast or too slow. If the emulation is too fast, the speed of the entire emulation may be reduced to make the target program **118** usable. However, timing issues may be difficult to identify and correct when asynchronous communications are involved. When two components communicate asynchronously, software that operates directly on the target system **100,** may fail to operate correctly during emulation of the target system on the host system **200.**

Furthermore, differences in input/output capabilities of the host system **200** may prevent an emulation from mimicking execution on the target system **100.** For example, an input device on the host system **200,** such as a keyboard, a mouse, a controller, and the like, may include differing numbers or arrangements of buttons, sensors, and the like. Additionally, such devices may provide differing outputs, such as, lights, sensors, haptics, and the like.

To some extent, an emulation may compensate for differences between target systems **100** and host systems **200** automatically; however, some differences create application-specific deviations. Such differences may be handled using application-specific configurations. One skilled in the art will appreciate that there are many mechanisms that may be used to implement application-specific configurations of an emulator. One such mechanism is to use application-specific metadata to identify such changes, configurations, modifications, and the like, to be used to during emulation.

Consider, for purposes of example, a target program **118** that is designed to be read from a CD-ROM by a target system **100.** One way to modify the behavior of the target program's **118** emulation is to create a layer of abstraction between CD-ROM reads and the data that is actually provided to the emulated target system **100.** In this example, metadata corresponding to the target program **118** is loaded onto the host system **200** for use by an emulator. This metadata may be stored in any format, such as, an XML file, a binary file, or the like. When the emulator on the host system **200** executes the target program **118**, the emulator receives and processes "READ" instructions. Metadata may be used to vary the data returned as a result of a READ instruction. For example, when the target program **118** includes a programming error, such error may be fixed by including metadata that instructs the emulator to modify or to insert alternate code when the erroneous code is read during emulation. This use of metadata is given for purposes of example, and is not intended to limit the scope of this disclosure. This use of metadata may be used with the techniques set forth below to modify and/or enhance emulation.

Effect Redirection and Enhancement

Effects, such as, for example, video, audio, and/or tactile interactions may be enhanced and/or modified in an emulator. This allows an emulator to, among other things, enhance a user's experience, take advantage of additional platform capabilities, and/or overcome platform limitations.

Redirection entails a measure of simulating the original effect. For example, a redirection of an audio effect into a video effect involves simulating the waveform of the original audio effect in a video context. As such, the simulation may be achieved through modeling of the physics by transposing the aspects of the waveform in the audio signal into a video signal which most closely tie into the original audio signal.

In one implementation, audio effects are redirected or augmented through visual effects. For example, as a video game running on an emulator attempts to vary the intensity of audio output, the emulator redirects the audio and varies aspects of the video image, such as, for example, the color, brightness, and the like. Likewise, video effects may be redirected or augmented through audio effect. For example, it is common during a video game play that a blinking of a display screen is triggered by an event during game play. In such instances, the emulator redirects the video signal and instead varies the speed of the background music or creates a unique sound effect corresponding to the event during game play.

In another implementation, a video overlay is displayed to convey audio information visually. For example, an icon's size may be varied with the intended audio intensity. When the intended audio intensity is low, the size of the icon is small; however, as intensity increases, the icon's size is similarly increased to convey the audio information. Likewise, when there is a triggering event during game play which results in an output of an audio effect in the target system **100,** the emulator may redirect the audio signal and instead display a pop-up screen which graphically displays the intended audio effect. These techniques may be applied to divert or modify effects or to augment effects. Such redirection may be advantageous since each of the redirected effect may be enhanced to take advantage of additional platform capabilities present in the host system **200.**

Alternatively, audio or video effect may be enhanced without redirection, as described below.

Controller Enhancement

One way for an emulator to enhance game play experience is to modify controller interactions. The capabilities of video game platforms and controllers may vary. For example, different controllers may have different buttons, different configurations, different sensors, and/or different feedback capabilities.

In one implementation, a Playstation®2 emulator intercepts (traps) control signals meant to enable the rumble feature of the Playstation®2 Dual-Shock controller, and provides an alternative effect, such as, for example, one or more of the following: (i) Video Shake-the emulator modifies video output to appear to move or shake; (ii) Video Cue-the emulator modifies video output by, for example, varying the brightness and/or intensity, or by displaying an icon or other notation of the effect; (iii) Audio Effect-the emulator generates audio signals to convey the rumble effect.

More specifically, an intercepted control signal which enables a haptic effect in the target system **100** may be simulated and redirected into an audio effect in the host system **200.** In such instances, the redirected audio effect output in the host system **200** may be in the form of an output of sound in varying intensity to simulate the vibration of an off-centered weight used to carry the tactile effect in the target system **100.**

Further, a subwoofer may be used with audio effect redirection to intercept rumble effect signals and generate a low-frequency effect that is conveyed by the subwoofer. Such implementation may be advantageous in a host platform **200** which may not provide a tactile interface in its controller.

Controller enhancements may be implemented in a Playstation®2 emulator by modifying the Playstation®2 input-output processor **106** emulation which takes place in the IOP interpreter **214** to identify and intercept certain control signals sent to the controller. For example, a control signal to turn on the rumble feature may be intercepted by the emulator in the IOP interpreter **214** and be processed accordingly. Such control signal, once intercepted by the emulator is redirected and enhanced according to one of the many ways described above.

Further, a host system **200** may include a user controller equipped with a linear actuator or any other similar haptic devices. Such user controller may be connected to the host system **200** through various medium, for example, Wi-Fi, Bluetooth, USB port, Infrared (IR), and the like. In such instances, the control signal which enables the haptic effect can be intercepted and further enhanced with additional video and/or audio effect in addition to the triggering of the haptic effect in the host system **200.** Additionally, the library functions can be amended to provide alternative functionality based upon the trapped commands and the desired event in the associated device.

In some implementations, it may be desirable to enhance a series of control signals as opposed to an individual control signal. For example, the emulator may be configured to identify a pattern, such as, a periodic activation of the rumble feature of a controller. By intercepting a pattern of events or control signals, the emulator may provide more appropriate effects for a particular situation. Consider, for example, an emulator that intercepts rumble control signals. If each rumble control signals are converted to video shake effects, then the video output may be shaking too often. This effect may not be desirable in some games. Instead of merely detecting rumble control signals, the emulator may be configured to detect rumble enablement for greater than a predefined period of time (e.g., 1.5 seconds). If the pattern occurs, then the video shake effect is used; otherwise, an alternative effect is performed. In the emulator of the present implementation, the output controller **306** handles the actual output of the enhanced control signal.

Likewise, any of the other effect redirection or enhancement that may prove to be disruptive if it were to be used too frequently may be controlled by the output controller **306.**

Audio-Visual Enhancement

In another embodiment, it may be desirable to enhance audio and/or video output using an emulator. For example, a legacy target system **100** may have been limited by video processing, storage, and/or display capabilities when developed and released. Such games may be augmented and/or modified to improve game play experience to take advantage of enhanced platform capabilities. As described previously, enhancement of signals can also take place whenever there is an effect redirection of signals. In other words, whatever the redirected signal (i.e. video or audio) is outputted in the host system **200,** the redirected signal can take advantage of the additional platform capabilities present in the host system **200.**

In one implementation, the emulator intercepts texturing controls at the PPE **204** which emulates the EE **102** of the target system **100** and applies new textures to improve graphic quality. This may allow, for example, a legacy video game to take advantage of advances in display capabilities present in the host system **200.** For example, a Playstation®2 game could be enhanced to take advantage of high-definition display capabilities without rewriting legacy video games.

Similarly, audio capability of the host system **200** may be much more advanced than that of the legacy target system **100.** As such, it is possible to perform digital signal processing to improve the quality of audio output to take advantage of additional capabilities present in the host system **200.**

Audio and/or Video Insertions

In some implementations, it is desirable for an emulator to augment an executed game by adding audio and/or video information during game play. For example, the emulator may add product placements, modify product placements, add informational displays, and the like. Such insertion of new signals may be warranted in the host system 200, since the target system **100** may have been technologically unsuitable for taking on such newly added signals. The newly added signals may be video and/or audio signals that take advantage of the additional platform capabilities in the host system **200.** In the emulator of the present implementation, the Signal Inserter **307** handles the insertion of new signals.

Haptic Insertion

The techniques described above with respect to FIGs. 1A and 1 B can be used by an emulator to further enhance playback. The emulator can be augmented to monitor an executed game (step **20**), to determine if haptic insertion criteria has been satisfied (step **22**), and to generate haptic control signals in response (step **24**).

Implementation Techniques

Implementation of the above concepts, and others, can be done in various ways. For example, and not by way of limitation, the commands can be intercepted (trapped) at the Application Layer via an emulator program so that the command can generate the same or a different function. Similarly, a command can be intercepted and replaced with a new command or routine at the device level (serial I/O). In this way, enhanced communication with existing or additional external peripheral devices can be accomplished.

It is also to be noted that any combination of the enhanced and/or redirected signal may be selectively generated based on a user preference setting. That is, for example, a user running the emulator in the host system **200** may prefer to redirect the haptic effect component intended for the target system **100** to a video effect output in the host system **200.** Another user may prefer to redirect such haptic effect component intended for the target system **100** to an audio effect component output in the host system **200.**

There are at least two ways through which the user may configure the user preference setting. First, the user may choose among multiple alternatives to select how redirection and enhancement of signals may occur. For example, a user may choose, among other effects, to redirect a haptic effect signal into a visual shake and a corresponding audio effect to be output in the target system **200.** Alternatively, the user may configure the user preference setting by inhibiting certain effect from being output in the host system **200.** For example, the user may find a particular audio or video effect to be undesirable. In such instance, the user may configure the user preference setting so that the undesirable audio or video effect will not be generated in the host system **200.**

As such, based on the user preference setting of redirection and enhancement, further enhancement of gaming experience during emulation can be achieved.

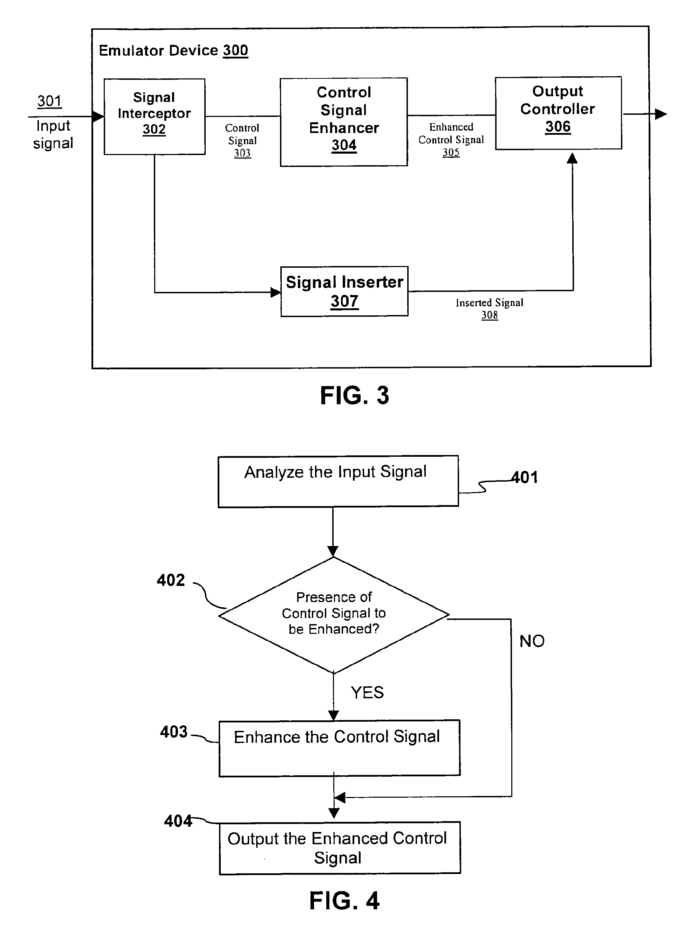

FIG. 3 illustrates an emulation enhancement device **300** at a high level. It is to be noted that the depicted emulation enhancement device may be implemented with computer-executable instructions recorded in a computer-readable medium and/or hardware elements which logically correspond to the depicted elements.

An input signal **301** is inputted through the emulator device. By way of example, the input signal **301** may be either EE translated machine code **213** or the IOP instructions interpreted by the IOP interpreter **214**. Once the input signal **301** is inputted, the Signal Interceptor **302** intercepts the control signal which is to be intercepted. Once the control signal is intercepted, the control signal **303** is outputted to the Control Signal Enhancer **304** for enhancement. The Control Signal Enhancer **304** handles the effect redirection, controller enhancement, and audio/visual enhancement of the control signal **303**, as described in detail above. The Control Signal Enhancer **304** outputs an enhanced control signal **305** to the Output Controller **306**. The emulator device may also include a Signal Inserter **307.** The Signal Inserter **307** allows for an insertion of an audio and/or video information during game play by generating the inserted signal **308.** The Output Controller **306** controls the output of either the enhanced control signal **305** or the inserted signal **308.**

FIG. 4 exemplarily depicts a flow chart illustrating the emulation enhancement method. The input signal which may be either the EE translated machine code **213** or the IOP instructions interpreted by the IOP interpreter **214** is analyzed in step **401.** In step **402,** it is determined whether the input signal contains a control signal which is to be enhanced. If there is a control signal to be enhanced, the effect redirection, controller enhancement, and audio/visual enhancement of the control signal is performed in step **403.** Upon enhancement of signals, the enhanced control signal is outputted in step **404.**

As shown above, enhancement of existing signals and addition of new signals allow for an enhanced gaming experience for a user emulating a target system game in a host system **200.** Such enhanced emulation according to the exemplary embodiments of the present invention enables the user to experience the advanced technological features of the host system **200** previously not available in the legacy target system **100.**

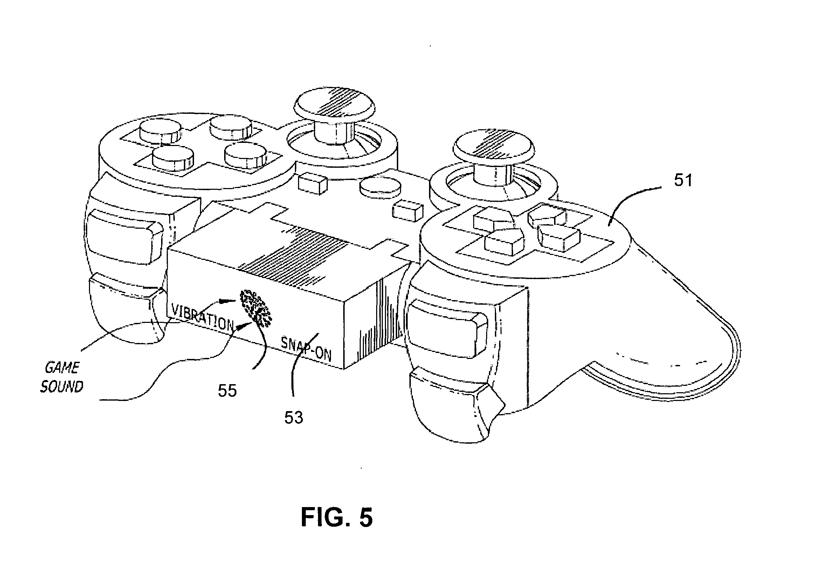

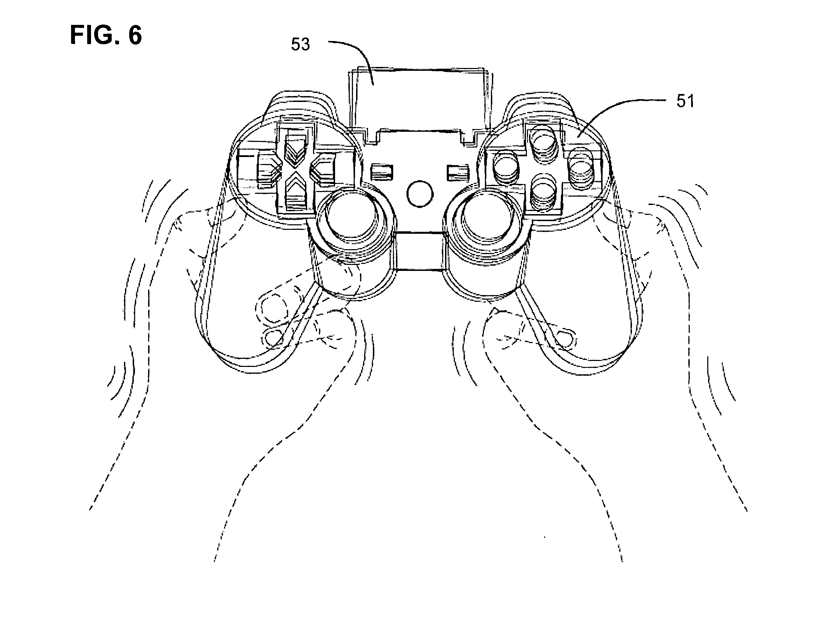

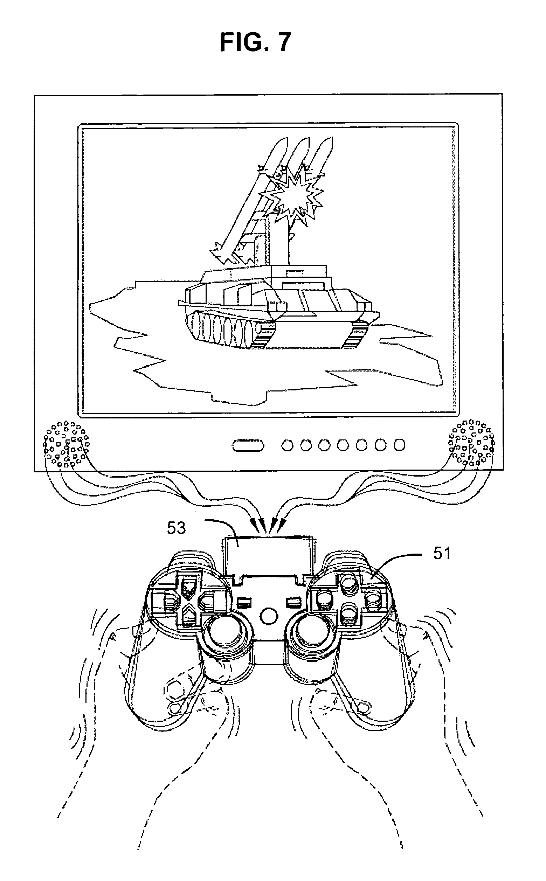

FIGs. 5, 6, and 7 depict an implementation of a haptic insertion device **53** that attaches to a controller **51**, such as, a video game controller, a remote control, a touch screen interface, a mouse, a keyboard, and the like, to enable or to augment haptics. The haptic insertion device **53** includes a microphone input **55**. This device **53** operates independently of the controller **51,** enabling haptic actuators in response to sound waves received through the microphone input **55**. FIG. 7 illustrates a haptic insertion device **53** receiving a game sound indicative of an explosion. In response to the sound, the device **53** enables a vibrotactile actuator to make the controller **51** vibrate.

In this implementation, the haptic insertion device **53** determines the entertainment software title based on input received through microphone **55**. For example, the device **53** may recognize music or other audio unique to the entertainment software title and enable criteria corresponding to the entertainment software title. Alternatively, the device **53** may identify an entertainment software title through a wireless data interface (*e.g.,* Bluetooth, Wi-Fi, WiMAX, ZigBee) from a signal originating from a platform for executing the entertainment software and/or a controller.

Title recognition and corresponding criteria may be updated through a data interface, such as, for example, a wired or wireless network interface, a serial interface, and the like.

Effect redirection, haptic insertion, and the like, may be implemented in a wide variety of ways. For example, haptic insertion and effect redirection may be triggered by one or more IOP instructions, by monitoring frequency domain audio signals in the sound processor unit **108,** by monitoring time domain audio signals in the sound processor unit **108,** and the like. In one implementation wherein haptic insertion is triggered on sound using the sound processor unit **108,** the frequency domain is constantly updated as audio is generated by entertainment software. Using measurable characteristics of frequency domain audio signals as criteria, haptic effects can be inserted when such criteria are met. Additionally, characteristics of inserted haptic effects can be varied. In some implementations, a haptic effect is inserted by monitoring frequency domain audio signals in the sound processor unit **108.** For example, haptic insertion may be triggered by an audio signal having a frequency less than **100** Hz, causing, for example, a vibrotactile response with intensity varying proportionally to characteristics of the audio signal (*e.g.,* intensity, tone, and the like).

The same or similar vibrotactile response can be inserted by monitoring signals other than frequency domain audio signals in the sound processor unit **108.** For example, it is also possible to identify a sound effect from the name of the effect. Some entertainment software titles initiate a sound by sending a command (*e.g.,* a text-based event name, a symbol, and the like) to an audio driver on the EE or IOP. For example, if there is a communication event from EE to IOP to start a sound at a specific location, this communication event can be trapped to trigger haptic insertion. Haptic insertion triggers may be defined offline for one or more entertainment titles. These triggers may be title-specific, or more general triggers may be defined that trigger haptic insertion at runtime based on criteria generally applicable to a variety of entertainment software titles.

While the above is a complete description of the preferred implementations, it is possible to use various alternatives, modifications and equivalents. Therefore, the scope of the present invention should be determined not with reference to the above description but should, instead, be determined with reference to the appended claims, along with their full scope of equivalents. Any feature described herein, whether preferred or not, may be combined with any other feature described herein, whether preferred or not. In the claims that follow, the indefinite article "A", or "An" refers to a quantity of one or more of the item following the article, except where expressly stated otherwise. The appended claims are not to be interpreted as including means-plus-function limitations, unless such a limitation is explicitly recited in a given claim using the phrase "means for."

## Claims

1. A method for enhancing entertainment through haptic insertion, the method comprising:
monitoring at least one signal during the execution of entertainment software;
recognizing that the monitored at least one signal satisfies a predetermined criterion;
and
generating a haptic control signal in response to the recognized satisfaction of the predetermined criterion, the generated haptic control signal operable to provide enhanced entertainment.

2. The method of claim 1, wherein monitoring at least one signal during the execution of entertainment software includes monitoring an audio signal.

3. The method of claim 1, wherein the entertainment software includes a video game.

4. The method of claim 1, further comprising:
identifying the entertainment software; and
identifying a predetermined criterion corresponding to the identified entertainment software,
wherein recognizing that the monitored at least one signal satisfies the predetermined criterion includes recognizing that the monitored at least one signal satisfied the identified predetermined criterion.

5. The method of claim 4, further comprising:
receiving a user-configurable haptic insertion option, such that haptic control signals are generated in response to the recognized satisfaction of the predetermined criterion based on the user-configurable haptic insertion option.

6. The method of claim 5, wherein the user-configurable haptic insertion option includes at least one option that is specific to the identified entertainment software.

7. The method of claim 1, further comprising:
in response to the generated haptic control signal, transmitting a signal through a wireless communications link to a haptic-enabled device, the transmitted signal operable to activate haptics.

8. The method of claim 7, wherein the haptic-enabled device is a video game controller.

9. The method of claim 7, wherein the haptic-enabled device is attached to a video game controller.

10. The method of claim 1, wherein the predetermined criterion includes a threshold.

11. The method of claim 1, wherein the predetermined criterion includes a pattern.

12. The method of claim 1, wherein the generated haptic control signal is operable to control vibration.

13. The method of claim 1, wherein the generated haptic control signal is operable to control force feedback.

14. A device providing enhanced entertainment through haptic insertion during entertainment software execution, the device comprising:
at least one processor; and
an output unit coupled to the at least one processor and including a haptic control output,
wherein the at least one processor is configured to monitor at least one signal during the execution of entertainment software, to recognize that the monitored at least one signal satisfies a predetermined criterion, to generate a haptic control signal in response to the recognized satisfaction of the predetermined criterion, and to output the generated haptic control signal through the haptic control output of the output unit.

15. The device of claim 14, further including a vibrotactile actuator coupled to the haptic control output.

16. The device of claim 14, further comprising a network interface coupled to the at least one processor, such that the predetermined criterion is updated using the network interface.

17. A haptic insertion device comprising:
an input;
a memory storing a haptic insertion criterion; and
a processor coupled to the input and the memory and configured to monitor the input during the execution of entertainment software, to recognize when the monitored input satisfies the haptic insertion criterion, and to control a haptic actuator in response to the recognized satisfaction of haptic insertion criterion.

18. The haptic insertion device of claim 17, wherein the input is a microphone.

19. The haptic insertion device of claim 17, further comprising a casing attachable to a controller.

20. The haptic insertion device of claim 17, wherein the controller is a video game controller.

21. The haptic insertion device of claim 17, wherein the controller is one or more from the group consisting of: a remote control; a touch screen interface; a mouse; and a keyboard.

22. The haptic insertion device of claim 17, further comprising a data interface coupled to the processor, the data interface including one or more from the group consisting of: a serial port; a network interface; and a wireless interface.

23. The haptic insertion device of claim 22, wherein the processor is further configured to update the haptic insertion criterion using the data interface.

24. The haptic insertion device of claim 17, wherein the processor is configured to control the haptic actuator by transmitting a wireless signal to a haptic-enabled controller.

25. The haptic insertion device of claim 17, wherein the processor is configured to control the haptic actuator by transmitting a wireless signal to a haptic-enabled device attachable to a controller.
